# EUROPEAN PATENT APPLICATION

(11) **EP 4 138 015 A1**
(43) Date of publication of application: **22.02.2023**
(21) Application number: 22186331.9
(22) Date of filing: 21.07.2022
(51) Int. Cl.: G06Q 20/08

(54) **AIRSPACE SERVICES CLEARINGHOUSE**

(30) Priority: 16.08.2021 US 202117403259
(71) Applicant: GE Aviation Systems LLC, Grand Rapids, MI 49512 (US)
(72) Inventor: STEWART, Kenneth, Grand Rapids, 49512 (US); MALIK, Vijay, Grand Rapids, 49512 (US); CHOW, Ray Yip, Grand Rapids, 49512 (US); NGUYEN, Kathy, Grand Rapids, 49512 (US); KUHLMAN, Michael Joseph, Grand Rapids, 49512 (US)
(74) Representative: Openshaw & Co.

(57) **Abstract**

A method comprises receiving (300) a route of an aircraft, identifying (302) a plurality of service providers to provide data services for the aircraft based on the route, receiving (304) data from the plurality of service providers associated with the data services, transmitting (306) the data received from the plurality of service providers to the aircraft, determining (308) a total amount associated with all of the data services provided by the plurality of service providers, and transmitting (310) information on the total amount associated with all of the data services provided by the plurality of service providers.

## Description

### FIELD

The present disclosure relates to monitoring of aerial vehicles, and more specifically, to an airspace services clearinghouse.

### BACKGROUND

Air traffic control systems monitor and coordinate air traffic to ensure safety of aircraft and to expedite the flow of air traffic. Traditional air traffic control systems monitor manned aircraft, such as commercial airliners. Traditional air traffic control systems generally do not monitor smaller unmanned aircraft, such as drones. However, drones have lately become much more pervasive in society and are being used in a variety of commercial applications, as well as by hobbyists and others.

In order to monitor drone traffic, unmanned traffic management systems have been developed and deployed. These systems can manage drone traffic similarly to ways in which traditional air traffic control systems manage air traffic of larger aircraft.

For short range drone flights, drone operators may operate the vehicles using mostly line of sight. However, for longer drone flights that largely take place outside of the line of sight of drone operators, the operators may need to rely on instrument data to pilot the drones. For example, drone operators may rely on ground based radar or other sensors to monitor the position of the drones they are piloting. Drone operators may also need authorization to take off and land from certain locations or to fly through certain airspace. Drone operators may also utilize telecommunications or other services during a drone flight.

All of the above services may be managed by third party service providers that may charge a fee for their services. In addition, a drone operator may need to combine data received from multiple service providers to successfully operate a drone flight. As such, a drone operator may need to establish a relationship with several such service providers to manage a drone flight. In addition, a service provider may need to contract with and bill each separate drone operator utilizing their service. This may be cumbersome and inefficient both for drone operators and for service providers. Accordingly, there is a need for clearinghouse to manage transactions between drone operators and third party service providers.

### SUMMARY

In an embodiment, a method may include receiving a route of an aircraft, identifying a plurality of service providers to provide data services for the aircraft based on the route, receiving data from the plurality of service providers associated with the data services, transmitting the data received from the plurality of service providers to the aircraft, determining a total amount associated with all of the data services provided by the plurality of service providers, and transmitting information on the total amount associated with all of the data services provided by the plurality of service providers.

In an embodiment, an apparatus may include one or more processors, one or more memory modules, and machine-readable instructions stored in the one or more memory modules. When executed by the one or more processors, the machine-readable instructions may cause the apparatus to receive a route of an unmanned aircraft system, identify a plurality of service providers to provide data services for the unmanned aircraft system based on the route, receive data from the plurality of service providers associated with the data services, transmit the data received from the plurality of service providers to the unmanned aircraft system, determine a total amount associated with all of the data services provided by the plurality of services providers, and transmit information on the total amount associated with all of the data services provided by the plurality of service providers.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.

### BRIEF DESCRIPTION OF THE DRAWINGS

FIG. 1 schematically depicts an exemplary system for managing air traffic utilizing an airspace services clearinghouse, according to one or more embodiments shown and described herein;
FIG. 2 schematically depicts an example airspace services clearinghouse, according to one or more embodiments shown and described herein;
FIG. 3 depicts a flow chart of an illustrative method of operating an airspace services clearinghouse, according to one or more embodiments shown and described herein; and
FIG. 4 depicts a flow chart of another illustrative method of operating an airspace services clearinghouse, according to one or more embodiments shown and described herein.

### DETAILED DESCRIPTION

The present disclosure generally relates to an airspace services clearinghouse. In the illustrated example, the clearinghouse may be used to manage transactions involving aircraft, such as unmanned aircraft systems (UAS), as disclosed herein. UAS may also be referred to as unmanned aerial vehicles (UAV) or drones. While the examples disclosed herein are directed to an airspace services clearinghouse for managing transactions involving UAS, it should be understood that in other examples, the airspace services clearinghouse may manage transactions for other types of aircraft (e.g., manned aircraft).

An aircraft may be monitored by one or more service providers such as a UAS service supplier (USS), a supplementary data service provider (SDSP), a provider of services for urban air mobility (PSU), or other entities. Multiple service providers may comprise a service provider network, such as an unmanned traffic management (UTM) network, wherein each service provider manages air traffic within a certain geographic area and/or for a certain set of clients. Thus, during a flight, an aircraft may be monitored by multiple service providers if the aircraft travels between different zones of coverage.

During an aircraft flight, the aircraft may utilize a variety of third party SDSPs. These service providers may provide data services such as radar or other surveillance services, telecommunications services, take-off or landing services, hand-offs between service providers, and the like. Such data services may be particularly useful for UAS flights that take place out of line of sight of an operator of the UAS. During such a flight, the operator may rely on data provided by these service providers to properly navigate or otherwise operate the UAS during the flight.

Each SDSP may provide certain data services and may charge a fee for the provided data services. As such, if an aircraft operator, such as a UAS operator, wishes to utilize multiple data service providers during an aircraft flight, the operator may need to identify service providers to provide the appropriate data services, request services with each of the service providers, receive the appropriate data from each of the service providers, and handle payments with each service provider separately. This may be a difficult and time-consuming process.

In addition, service providers may lack an incentive to provide data services to small-scale aircraft operators. Infrastructure costs can be expensive and having to separately contract with and bill individual aircraft operators may not be a profitable business model. As such, needed infrastructure may not be built without a method of easily tracking and managing data and transactions between service providers and aircraft operators.

Accordingly, disclosed herein is an airspace service clearinghouse that may act as an intermediary between an aircraft and a plurality of service providers. As disclosed herein, the clearinghouse may establish relationships with service providers, reserve resources of service providers on behalf of aircraft, and act as a conduit for relaying data and/or payment information between aircraft and service providers. This may provide a standardized way for aircraft and service providers to handle fees and payment while reducing counterparty risk. It may also provide a revenue stream for USS and other service providers.

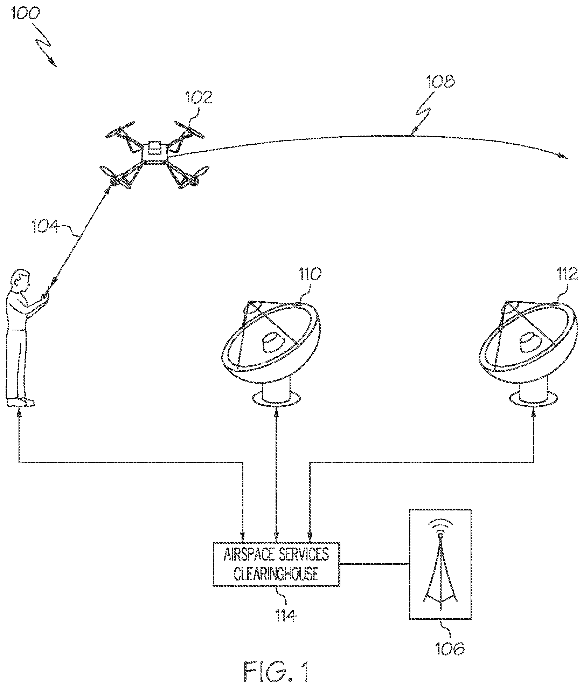

FIG. 1 depicts an example system 100 that may include an airspace services clearinghouse, as disclosed herein. In the example of FIG. 1, a UAS 102 is flown in a certain airspace along a route 108. The UAS 102 may be controlled remotely by a UAS operator 104. The UAS operator 104 may communicate with the UAS 102 via a command and control link (e.g., satellite, radio, cell phone). The UAS operator 104 may transmit commands to control the movement and operation of the UAS 102 and the UAS 102 may transmit commands back to the UAS operator 104 (e.g., telemetry data or other types of data). In some examples, the UAS 102 may operate partially or completely autonomously.

A service provider network 106 may manage air traffic involving the UAS 102 and other UAS. The service provider network 106 may comprise one or more USS or other service providers. A USS may manage UAS traffic within a certain geographic area and/or for a certain set of clients. A USS may monitor UAS with either ground based radar tracking and/or by receiving telemetry directly from UAS that identify their positions. In addition to tracking the position of UAS, a USS may communicate with UAS operators to provide instructions to guide UAS along certain routes to avoid collision with other UAS and to otherwise manage airspace, as disclosed herein. In embodiments, the route 108 along which the UAS 102 is traveling may be included in a flight plan scheduled with the service provider network 106.

In the example of FIG. 1, data service providers 110 and 112 provide data services to the UAS 102 and/or the UAS operator 104 during the flight of the UAS 102. The data service providers 110, 112 may provide radar or other surveillance or monitoring services, telecommunications services, take-off or landing services, or other data services. In the example of FIG. 1, two service providers 110 and 112 are shown along the route 108. However, it should be understood that in other examples, any number of service providers may provide data services. In some examples, data services may be provided to the UAS 102 and/or the UAS operator 104 related to locations not along a route of the UAS 102.

In the example of FIG. 1, an airspace services clearinghouse 114 may communicate with the UAS operator 104, the service provider network 106, and/or the service providers 110, 112, as disclosed herein. In some examples, the airspace services clearinghouse 114 may be part of the service provider network 106. In other examples, the airspace services clearinghouse 114 may be separate from the service provider network 106. In some examples, the airspace services clearinghouse 114 may be a cloud-based computing system.

Before the flight of the UAS 102 begins, the UAS operator 104 may request certain data services from the airspace services clearinghouse 114 to be utilized during the flight of the UAS 102. The airspace services clearinghouse 114 may identify service providers that are able to provide the requested data services (e.g., service providers 110, 112) and may reserve the appropriate resources with the identified service providers. Then, during the flight of the UAS 102, the service providers 110, 112 may provide the data services for the UAS 102 and may transmit any data associated with the data services to the UAS operator 104, either directly or via the airspace services clearinghouse 114.

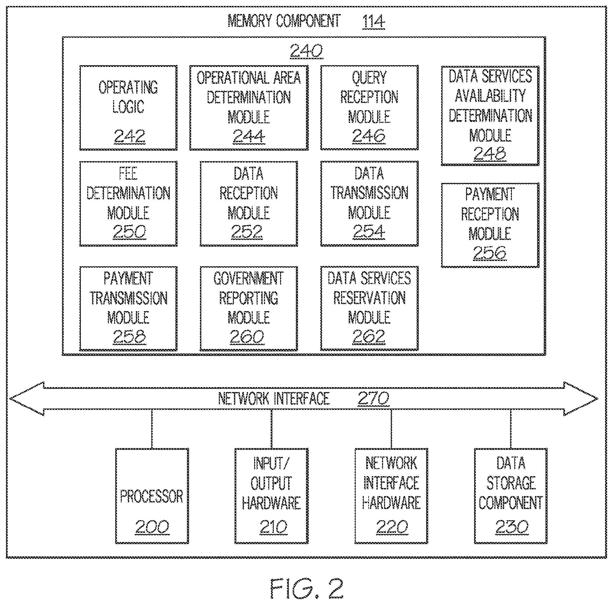

The service providers 110, 112 may also determine a fee associated with the data service provided and each of the service providers 110, 112 may transmit an amount of the fee to the airspace services clearinghouse 114. The airspace services clearinghouse 114 may then aggregate all of the fees into a total amount and may transmit the total amount of the fees to the UAS operator 104. The UAS operator 104 may then make a payment to the airspace services clearinghouse 114 for the total amount of the fees and the airspace services clearinghouse 114 may transmit the appropriate fee to each of the service providers 110, 112. Additional details of the airspace services clearinghouse 114 are described below with respect to FIG. 2.

Now referring to FIG. 2, the components of the airspace services clearinghouse 114 are schematically depicted. As illustrated in FIG. 2, the airspace services clearinghouse 114 may include a processor 200, input/output hardware 210, network interface hardware 220, a data storage component 230, and a non-transitory memory component 240. The memory component 240 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 240 may be configured to store operating logic 242, an operational area determination module 244, a query reception module 246, a data services availability determination module 248, a fee determination module 250, a data reception module 252, a data transmission module 254, a payment reception module 256, a payment transmission module 258, a government reporting module 260, and a data services reservation module 262 (each of which may be embodied as a computer program, firmware, or hardware, as an example). A network interface 270 is also included in FIG. 2 and may be implemented as a bus or other interface to facilitate communication among the components of the airspace services clearinghouse 114.

The processor 200 may include any processing component configured to receive and execute instructions (such as from the data storage component 230 and/or the memory component 240). The input/output hardware 210 may include a monitor, keyboard, mouse, printer, camera, microphone, speaker, touch-screen, and/or other device for receiving input and outputting information. The network interface hardware 220 may include any wired or wireless networking hardware, such as a modem, LAN port, wireless fidelity (Wi-Fi) card, WiMax card, mobile communications hardware, and/or other hardware for communicating with the service provider network 106, the UAS 102, the UAS operator 104, and other networks and/or devices.

The data storage component 230 may store information received from UAS (e.g., the UAS 102 in the example of FIG. 1), service providers (e.g., service providers 110, 112 of FIG. 1), or a service provider network (e.g., the service provider network 106 of FIG. 1). The data storage component 230 may also store other data utilized by the airspace services clearinghouse 114 as described in further detail herein.

Included in the memory component 240 are the operating logic 242, the operational area determination module 244, the query reception module 246, the data services availability determination module 248, the fee determination module 250, the data reception module 252, the data transmission module 254, the payment reception module 256, the payment transmission module 258, the government reporting module 260, and the data services reservation module 262. The operating logic 242 may include an operating system and/or other software for managing components of the airspace services clearinghouse 114.

The operational area determination module 244 may determine an area in which a UAS may operate during a flight. In some examples, the operational area determination module 244 may determine a route for a UAS (e.g., the route 108 of the UAS 102 in the example of FIG. 1). In some examples, the operational area determination module 244 may determine areas in which a user of the airspace services clearinghouse 114 is interested in, which may not be associated with a route of an aircraft. In some examples, the UAS operator 104 may submit a planned route of the UAS 102 to the airspace services clearinghouse 114. In other examples, the airspace services clearinghouse 114 may receive a planned route of the UAS 102 from the service provider network 106.

In some examples, the operational area determination module 244 may assist the UAS operator 104 in planning a route of the UAS 102. For example, the UAS operator 104 may specify certain parameters of a planned flight operation for the UAS 102 (e.g., a starting and ending location and/or certain waypoints to be visited along the way) and certain data services to be utilized during the flight. The operational area determination module 244 may then identify service providers that are able to provide the data services (as described in further detail below) and may determine a route for the flight of the UAS 102 based on the identified service providers. For example, the operational area determination module 244 may determine a route for the UAS 102 that stays within range of certain service providers that are able to provide certain data services. In some examples, the operational area determination module 244 may provide access to a service availability map indicating service providers available to provide services at a variety of locations. This may allow the UAS operator 104 to ensure that sufficient services are available for a particular flight route.

Still referring to FIG. 2, the query reception module 246 may receive a query from the UAS operator 104 regarding data services that are available. When planning a flight plan for the UAS 102, the UAS operator 104 may desire certain data services to support the flight. It may be time-consuming and cumbersome for the UAS operator 104 to identify service providers that are able to provide the desired data services. As such, the UAS operator 104 may send a query to the airspace services clearinghouse 114 seeking information about the availability of data services that can be provided by service providers. The query may include the types of data services to be provided, the locations where the data services are to be provided, and other relevant information associated with the data services to be provided. The query may be received by the query reception module 246. Examples queries may be for services available at a collection of points, within a geographic region, or along a flight path.

Still referring to FIG. 2, the data services availability determination module 248 may determine service providers that are able to provide certain data services. As explained above, in one example, the operational area determination module 244 may determine a route for the UAS 102 based on the availability of service providers able to provide certain data services. As also explained above, the query reception module 246 may receive a query from the UAS operator 104 requesting information about certain data services that are able to be provided by service providers. As such, the data services availability determination module 248 may identify service providers that are able to provide certain data services. In addition to identifying service providers, the data services availability determination module 248 may determine the specific data services that are offered by service providers as well as prices for those data services. Thus, UAS operators may utilize the airspace services clearinghouse 114 to discover what data services are available. UAS operators may then use this information when planning flight operations.

In one example, the data storage component 230 may store information about service providers and data services offered by those service providers. For example, the data storage component 230 may store information regarding the locations of service providers, the types of data services offered by the service providers, and prices associated with the offered data services, among other information. As such, the data services availability determination module 248 may determine the availability of service providers for providing certain data services based on the data stored in the data storage component 230.

In some examples, the data services availability determination module 248 may query known service providers asking whether they can provide certain data services. The data services availability determination module 248 may receive responses from the service providers and may determine data services that the service providers are able to provide based on the responses.

Referring still to FIG. 2, the fee determination module 250 may determine fees owed to service providers for providing data services to the UAS 102. As explained above, during a flight of the UAS 102, certain service providers (e.g., service providers 110, 112) may provide data services for the UAS 102. Each service provider may charge a fee for the provided data services. Rather than sending the amount of the fee directly to the UAS operator 104, each service provider may transmit an amount of the fee incurred for the data services provided to the airspace services clearinghouse 114. Fees may be charged on a per-flight basis, a per-hour basis, on the basis of the amount of data received, or other arrangements determined by service providers. In some examples, service providers may charge a fixed fee for certain data services. In other examples, service providers may dynamically determine fees for data services based on demand or other factors.

In some examples, the fee determination module 250 may also determine fees owed to government agencies incurred during the operation of the flight of the UAS (e.g., taxes, fees for vehicle registration or pilot certificates, insurance payments, or other fees). In some examples, the data storage component 230 may store government fees associated with different types of flight operations and the fee determination module 250 may determine government fees based on this data. In other examples, the fee determination module 250 may query government servers to determine government fees associated with the flight of the UAS 102. In some examples, the fee determination module 250 may also determine fees charged by the service provider network 106 for monitoring the flight of the UAS 102 or for other services. In some examples, the fee determination module 250 may also determine fees charged by the airspace services clearinghouse 114 itself.

After receiving and/or determining fees assessed by service providers, government agencies, one or more service provider networks, or other charging fees associated with a flight of the UAS 102, the fees associated with each service provider may be stored in the data storage component 230. The fee determination module 250 may then aggregate the fees from each source to determine a total amount of fees associated with the flight of the UAS 102.

Upon receiving payment for a total amount of fees from the UAS operator 104, as explained below, the fee determination module 250 may determine an amount of a fee owed to each of a plurality of service providers. In one example, the fee determination module 250 may access the data storage component 230, where the fees associated with each service provider are stored.

In some examples, fees determined by the fee determination module 250 may be stored for a period of time and the airspace services clearinghouse 114 may net out accrued fees at a later time. For example, as the fee determination module 250 determines fees owed by various UAS to various service providers, the fee determination module 250 may store this fee information in the data storage component 230, along with amounts owed by each UAS and amounts owed to each service provider. Then, after a predetermined period of time (e.g., every month), the fee determination module 250 may determine a total amount of fees owed by one or more users (e.g., UAS) accrued during the predetermined period of time. In some examples, fees may be accrued for each UAS flight. In other examples, fees may be accrued on a data usage basis (e.g., based on an amount of data downloaded, a duration and/or number of simultaneous connections in which live data was received, and the like). The fee determination module 250may determine a total amount of fees owed to each service provider for data services performed during the predetermined period of time. The airspace services clearinghouse 114 may then transmit the total amount of fees accrued during the predetermined period of time by each UAS to the appropriate UAS. When a UAS submits payment for the accrued amount, the airspace services clearinghouse 114 may then make payment to each service provider for the amount accrued during the predetermined period of time. As such, payments may need to be made less frequently, thereby increasing the efficiency of the payment process.

Referring still to FIG. 2, the data reception module 252 may receive data from the service providers (e.g., service providers 110, 112 of FIG. 1), the UAS operator 104, or the service provider network 106. As explained above, service providers may provide data services for the UAS 102 and each service provider may determine a fee amount for a provided data service and may transmit the fee amount to the airspace services clearinghouse 114. The fee amount from each service provider may be received by the data reception module 252.

In addition, in some examples, one or more service providers may transmit data associated with provided data services to the airspace services clearinghouse 114 to be relayed to the UAS operator 104. For example, the service provider 110 of FIG 1 may provide radar data tracking of the UAS 102. In this example, the service provider 110 may transmit the captured radar data to the airspace services clearinghouse 114, which may be received by the data reception module 252. The airspace services clearinghouse 114 may then transmit the received radar data to the UAS operator 104, as explained further below. However, in other examples, one or more service providers may transmit data associated with provided data services directly to the UAS operator 104.

Referring still to FIG. 2, the data transmission module 254 may transmit data to service providers (e.g., service providers 110, 112 of FIG. 1), the UAS operator 104, or the service provider network 106. In one example, the data transmission module 254 may transmit a total amount of fees determined by the fee determination module 250 to the UAS operator 104. In another example, the data transmission module 254 may transmit data received from service providers to the UAS operator 104. In some examples, the airspace services clearinghouse 114 may utilize an application programming interface (API) to transmit and/or receive data. For example, UAS operators or service providers may utilize the API to transmit and/or receive data (e.g., fees or data associated with data services) from the airspace services clearinghouse 114. In one example, a UAS operator may utilize the API to view the fees for data services charged by various service providers. The API may integrate with different service providers.

Referring still to FIG. 2, the payment reception module 256 may receive payment from the UAS operator 104. As explained above, the fee determination module 250 may determine a total amount of fees owed by the UAS operator 104 for data service provided by service providers, government taxes and fees, USS fees, or other fees. As further explained above, the data transmission module 254 may transmit the determined total amount of fees to the UAS operator 104. Thus, in some examples, the UAS operator 104 may transmit a payment for the total amount of fees to the airspace services clearinghouse 114, which may be received by the data transmission module 254. In other examples, payment may be made through a third party payment processing service rather than the airspace services clearinghouse 114. In some examples, the UAS operator 104 may receive payment for services provided, such as collecting and uploading sensor data collected during a flight.

The payment transmission module 258 may transmit payments to service providers and/or government entities. As explained above, the payment reception module 256 may receive a payment from the UAS operator 104 for a total amount of fees associated with a UAS flight. The payment transmission module 258 may then transmit payment to each entity that is owed a fee in the correct amount. For example, in the example of FIG. 1, service providers 110 and 112 may each provide data services for the UAS 102. The service provider 110 may then transmit a first fee amount to the airspace services clearinghouse 114 associated with the data services it provided and the service provider 112 may transmit a second fee amount to the airspace services clearinghouse 114 for the data services it provided. The data reception module 252 may receive the first and second fee amounts and the fee determination module 250 may aggregate the first and second fee amounts to determine a total fee amount. The data transmission module 254 may transmit the total fee amount to the UAS operator 104 and the payment reception module 256 may receive payment in an amount equal to the total fee amount. The payment transmission module 258 may then transmit a payment of the first fee amount to the service provider 110 and may transmit a payment of the second fee amount to the service provider 112. In some examples, the payment transmission module 258 may validate a means of payment (e.g., ensure that a proper billable account is associated with the UAS 102) and the data transmission module 254 may only transmit data after the means of payment is validated.

Referring still to FIG. 2, the government reporting module 260 may transmit data to government agencies as disclosed herein. Certain government agencies may require certain regulatory compliance reporting. For example, a city may require UAS to report all take-offs and landings or all flights that occur using airspace within the city limits. As such, when the airspace services clearinghouse 114 receives data from a service provider indicating that the UAS 102 has taken off or landed in the city, the government reporting module 260 may automatically report this to the appropriate city agency. In some examples, the government reporting module 260 may automatically register UAS or other aircraft with government agencies as required by government regulations. As such, the airspace services clearinghouse 114 may automatically perform certain government required reporting or compliance tasks such that the UAS operator 104 need not perform such tasks. In some examples, the government reporting module 260 may dynamically determine fines or citations for violations of government regulations incurred by a UAS flight.

Referring still to FIG. 2, the data services reservation module 262 may reserve certain resources with service providers. As explained above, the operational area determination module 244 may determine service providers that are able to provide data services associated with a flight plan for a UAS. The data services reservation module 262 may then reserve the required resources from the appropriate service providers.

For example, in the example of FIG. 1, the UAS 102 flying along the route 108 may desire radar monitoring services from service provider 110 during a first time along a first portion of the route 108 and additional radar monitoring services from the service provider 112 during a second time along a second portion of the route 108. As such, the data services reservation module 262 may reserve the use of radar services from the service providers 110, 112 at the appropriate times and locations such that the radar services will be provided during the flight of the UAS 102.

In some examples, the airspace services clearinghouse 114 may establish long-term contractual relationships with one or more service providers. For example, the airspace services clearinghouse 114 may pay a service provider a monthly or annual flat fee (or a fee recurring at some other time period) for the use of the service provider to provide data services. This may entitle the airspace services clearinghouse 114 to a certain amount of time or bandwidth or other resources from the service provider, which may allow the service provider to be treated as a surveillance-as-a-service model. As such, as UAS request data services that the service provider is able to provide, the data services reservation module 262 may reserve the appropriate resources from the service provider to provide the data services. Because the airspace services clearinghouse 114 has previously paid the service provider for the use of resources (e.g., as a monthly or annual fee), the airspace services clearinghouse 114 need not pay the service provider individually for each data service transaction. Instead, the airspace services clearinghouse 114 may make a single upfront payment to the service provider and may then recoup the cost from UAS on a per-flight, per-hour or other basis.

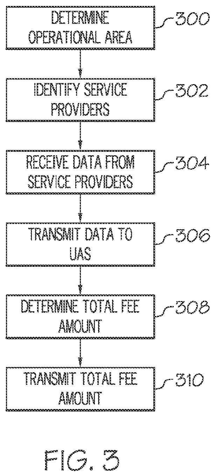

Referring now to FIG. 3, a flow chart is shown of an example method of operating the airspace services clearinghouse 114 of FIGS. 1-2. At step 300, the operational area determination module 244 may determine an operational area (e.g., a route) of the UAS 102. In some examples, the operational area determination module 244 may determine a route of the UAS 102 based on a route received from the UAS operator 104. In some examples, the operational area determination module 244 may determine a route of the UAS 102 based on a route received from the service provider network 106. In other examples, the operational area determination module 244 may determine a route for the UAS 102 based on parameters received from the UAS operator 104.

At step 302, the data services availability determination module 248 may identify a plurality of service providers to provide data services for the UAS 102 based on the route determined by the operational area determination module 244. In particular, the data services availability determination module 248 may identify service providers that are able to provide data services to support the flight of the UAS 102. In some examples, the data services availability determination module 248 may provide information about multiple identified service providers, such as costs, delivery-time, accuracy, and other performance metrics, to the UAS operator 104 such that the UAS operator 104 may select one or more service providers to provide data services for the UAS 102.

At step 304, the data reception module 252 may receive data from the service providers identified by the data services availability determination module 248. In particular, the data reception module 252 may receive data associated with the data services provided by the identified service providers (e.g., radar data, telecommunications data, and the like).

At step 306, the data transmission module 254 may transmit the data received from the plurality of service providers to the UAS 102 and/or the UAS operator 104. That is, as the airspace services clearinghouse 114 receives data from service providers associated with provided data services, the received data may be relayed to the UAS 102 and/or the UAS operator 104. In some examples, the data transmission module 254 may also transmit received data to other service providers.

At step 308, the fee determination module 250 may determine a total amount associated with all of the data services provided by the plurality of service providers. In one example, each service provider that provides data services to the UAS 102 may transmit a fee amount for the provided data services to the airspace services clearinghouse 114. The fee amount from each service provider may be received by the data reception module 252. The fee determination module 250 may then aggregate the fee amount received from each service provider to determine a total amount of fees from all of the service providers.

At step 310, the data transmission module 254 may transmit information on the total amount associated with all of the data services provided by the plurality of service providers to the UAS operator 104. In one example, the data transmission module 254 may transmit the total amount of fees from all of the service providers providing data services determined by the fee determination module 250 to the UAS operator 104. As such, the UAS operator 104 may receive a total amount of fees for all data services provided by service providers for the flight of the UAS 102. In some examples, the data transmission module 254 may transmit an invoice or other report to the UAS operator 104 describing all expenses incurred from a single UAS flight or from all UAS flights within a given predetermined interval.

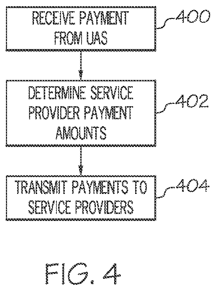

Referring now to FIG. 4, a flow chart is shown of another example method of operating the airspace services clearinghouse 114 of FIGS. 1-2. The example method of FIG. 4 may be performed by the airspace services clearinghouse 114 after the UAS operator 104 has received a total amount of fees for all data service performed by service providers. At step 400, the payment reception module 256 may receive a payment from the UAS operator 104. In particular, the payment reception module 256 may receive a payment in an amount equal to the total amount of fees for data services provided by a plurality of service providers.

At step 402, the fee determination module 250 may determine a fee to be paid to each of a plurality of service providers for data services provided to the UAS 102. For example, as described above, when a service provider transmits, to the airspace services clearinghouse 114, an amount of a fee for data services provided, the fee amount may be stored in the data storage component 230 along with the service provider associated with that fee. Then, when a payment for a total amount of fees is received by the payment reception module 256, the fee determination module 250 may access the fee information stored in the data storage component 230 to determine how much of the total amount of fees is owed to each of the plurality of service providers providing data services.

At step 404, the payment transmission module 258 may transmit payments to each of the service providers based on amounts associated with the data services provided by each of the service providers. That is, after the fee determination module 250 determines a fee owed to each service provider, the payment transmission module 258 may transmit payments to each of the service providers in the appropriate amount.

It should now be understood that the devices, systems, and methods described herein provide an airspace services clearinghouse. The disclosed airspace services clearinghouse may determine a route of an unmanned aircraft system based on certain requirements or criteria. The airspace services clearinghouse may then identify a plurality of service providers to provide data services for the unmanned aircraft system based on the route. The airspace services clearinghouse may reserve resources with the plurality of service providers such that the service providers will provide the appropriate data services during the flight of the unmanned aircraft system.

During the flight of the unmanned aircraft system, the service providers may provide the data services to support the flight. The data generated by the service providers may be transmitted to the airspace services clearinghouse, which may then relay the data to the unmanned aircraft system. Each service provider may also transmit a fee for the data services provided to the airspace services clearinghouse. The airspace services clearinghouse may then aggregate the fees from all the service providers and transmit a total fee amount to the unmanned aircraft system.

The unmanned aircraft system may then transmit a payment in the total amount of the fees to the airspace services clearinghouse, which may then transmit payments in the appropriate amount to each of the service providers. As such, the unmanned aircraft system may need only to communicate with the airspace services clearinghouse without needing to transact directly with the service providers. In some examples, a separate payment processor may handle the payment of the fees rather than the airspace services clearinghouse.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the invention are provided by the subject matter of the following clauses.

A method comprising receiving a route of an aircraft; identifying a plurality of service providers to provide data services for the aircraft based on the route; receiving data from the plurality of service providers associated with the data services; transmitting the data received from the plurality of service providers to the aircraft; determining a total amount associated with all of the data services provided by the plurality of service providers; and transmitting information on the total amount associated with all of the data services provided by the plurality of service providers.

The method of any preceding clause, wherein at least one of the data services comprises providing surveillance data to the aircraft.

The method of any preceding clause, wherein at least one of the data services comprises authorizing the aircraft to take off or land at a particular location.

The method of any preceding clause, further comprising receiving a payment associated with the aircraft based on the information on the total amount associated with all of the data services; and transmitting payments to each of the service providers based on amounts associated with the data services provided by each of the service providers.

The method of any preceding clause, further comprising transmitting data associated with the data services provided by one or more of the service providers to one or more government agencies.

The method of any preceding clause, further comprising periodically determining a new total amount associated with all of the data services provided by the plurality of service providers during a predetermined interval and periodically transmitting the new total amount to the aircraft.

The method of any preceding clause, further comprising transmitting a payment to at least one of the service providers for an amount equal to a flat fee for the data services performed by the at least one of the service providers during a fixed interval of time.

The method of any preceding clause, further comprising determining one or more government fees associated with one or more government agencies based on the route of the aircraft; and transmitting a total amount of the one or more government fees to the aircraft.

The method of any preceding clause, further comprising receiving a payment associated with the aircraft equal to the total amount of the one or more government fees; and transmitting payments to each of the one or more government agencies based on amounts associated with the government fees associated with each of the one or more government agencies.

The method of any preceding clause, further comprising determining an unmanned aircraft system service supplier fee associated with the route of the aircraft; and transmitting an amount of the unmanned aircraft system service supplier fee to the aircraft.

The method of any preceding clause, further comprising receiving a query from the aircraft regarding availability of a first set of data services; and transmitting, to the aircraft, information associated with one or more of the service providers that are able to provide the first set of data services.

The method of any preceding clause, further comprising contracting with the one or more of the service providers to provide the first set of data services to the aircraft.

An apparatus comprising one or more processors; one or more memory modules; and machine-readable instructions stored in the one or more memory modules that, when executed by the one or more processors, cause the apparatus to receive a route of an unmanned aircraft system; identify a plurality of service providers to provide data services for the unmanned aircraft system based on the route; receive data from the plurality of service providers associated with the data services; transmit the data received from the plurality of service providers to the unmanned aircraft system; determine a total amount associated with all of the data services provided by the plurality of service providers; and transmit information on the total amount associated with all of the data services provided by the plurality of service providers.

The apparatus of any preceding clause, wherein the machine-readable instructions, when executed, further cause the apparatus to receive a payment associated with the unmanned aircraft system based on the information on the total amount associated with all of the data services; and transmit payments to each of the service providers based on amounts associated with the data services provided by each of the service providers.

The apparatus of any preceding clause, wherein the machine-readable instructions, when executed, further cause the apparatus to transmit data associated with the data services provided by one or more of the service providers to one or more government agencies.

The apparatus of any preceding clause, wherein the machine-readable instructions, when executed, further cause the apparatus to determine one or more government fees associated with one or more government agencies based on the route of the unmanned aircraft system; and transmit a total amount of the one or more government fees to the unmanned aircraft system.

The apparatus of any preceding clause, wherein the machine-readable instructions, when executed, further cause the apparatus to receive a payment associated with the unmanned aircraft system equal to the total amount of the one or more government fees; and transmit payments to each of the one or more government agencies based on amounts associated with the government fees associated with each of the one or more government agencies.

The apparatus of any preceding clause, wherein the machine-readable instructions, when executed, further cause the apparatus to periodically determine a new total amount associated with all of the data services provided by the plurality of service providers during a predetermined interval and periodically transmit the new total amount to the unmanned aircraft system.

The apparatus of any preceding clause, wherein the machine-readable instructions, when executed, further cause the apparatus to determine an unmanned aircraft system service supplier fee associated with the route of the unmanned aircraft system; and transmit an amount of the unmanned aircraft system service supplier fee to the unmanned aircraft system.

The apparatus of any preceding clause, wherein the machine-readable instructions, when executed, further cause the apparatus to receive a query from the unmanned aircraft system regarding availability of a first set of data services; and transmit, to the unmanned aircraft system, information associated with one or more of the service providers that are able to provide the first set of data services.

## Claims

1. A method comprising:
receiving (300) a route of an aircraft;
identifying (302) a plurality of service providers to provide data services for the aircraft based on the route;
receiving (304) data from the plurality of service providers associated with the data services;
transmitting (306) the data received from the plurality of service providers to the aircraft;
determining (308) a total amount associated with all of the data services provided by the plurality of service providers; and
transmitting (310) information on the total amount associated with all of the data services provided by the plurality of service providers.

2. The method of claim 1, wherein at least one of the data services comprises providing surveillance data to the aircraft.

3. The method of any preceding claim, wherein at least one of the data services comprises authorizing the aircraft to take off or land at a particular location.

4. The method of any preceding claim, further comprising:
receiving (400) a payment associated with the aircraft based on the information on the total amount associated with all of the data services; and
transmitting (404) payments to each of the service providers based on amounts associated with the data services provided by each of the service providers.

5. The method of any preceding claim, further comprising:
transmitting data associated with the data services provided by one or more of the service providers to one or more government agencies.

6. The method of any preceding claim, further comprising:
periodically determining a new total amount associated with all of the data services provided by the plurality of service providers during a predetermined interval and periodically transmitting the new total amount to the aircraft.

7. The method of any preceding claim, further comprising:
transmitting (404) a payment to at least one of the service providers for an amount equal to a flat fee for the data services performed by the at least one of the service providers during a fixed interval of time.

8. The method of any preceding claim, further comprising:
determining (402) one or more government fees associated with one or more government agencies based on the route of the aircraft; and
transmitting (404) a total amount of the one or more government fees to the aircraft.

9. The method of claim 8, further comprising:
receiving (400) a payment associated with the aircraft equal to the total amount of the one or more government fees; and
transmitting (404) payments to each of the one or more government agencies based on amounts associated with the government fees associated with each of the one or more government agencies.

10. The method of any preceding claim, further comprising:
determining (402) an unmanned aircraft system service supplier fee associated with the route of the aircraft; and
transmitting (404) an amount of the unmanned aircraft system service supplier fee to the aircraft.

11. The method of any preceding claim, further comprising:
receiving a query from the aircraft regarding availability of a first set of data services; and
transmitting, to the aircraft, information associated with one or more of the service providers that are able to provide the first set of data services.

12. The method of claim 11, further comprising:
contracting with the one or more of the service providers to provide the first set of data services to the aircraft.

13. An apparatus (114) comprising:
one or more processors (200);
one or more memory modules (240); and
machine-readable instructions stored in the one or more memory modules that, when executed by the one or more processors, cause the apparatus to:
receive a route of an unmanned aircraft system;
identify a plurality of service providers to provide data services for the unmanned aircraft system based on the route;
receive data from the plurality of service providers associated with the data services;
transmit the data received from the plurality of service providers to the unmanned aircraft system;
determine a total amount associated with all of the data services provided by the plurality of service providers; and
transmit information on the total amount associated with all of the data services provided by the plurality of service providers.

14. The apparatus of claim 13, wherein the machine-readable instructions, when executed, further cause the apparatus to:
receive a payment associated with the unmanned aircraft system based on the information on the total amount associated with all of the data services; and
transmit payments to each of the service providers based on amounts associated with the data services provided by each of the service providers.

15. The apparatus of claim 13 or 14, wherein the machine-readable instructions, when executed, further cause the apparatus to:
transmit data associated with the data services provided by one or more of the service providers to one or more government agencies.
